# EUROPEAN PATENT APPLICATION

(11) **EP 4 465 076 A1**
(43) Date of publication of application: **20.11.2024**
(21) Application number: 24164952.4
(22) Date of filing: 20.03.2024
(51) Int. Cl.: G01S 7/40, G01S 13/06, G01S 13/74

(54) **RADAR EMULATOR AND METHOD OF EVALUATING A TESTING ENVIRONMENT**

(30) Priority: 15.05.2023 US 202318317739
(71) Applicant: Rohde & Schwarz GmbH & Co. KG, 81671 München (DE)
(72) Inventor: HABERL, Thomas, 81671 München (DE); SAALFELD, Maximilian, 81671 München (DE)
(74) Representative: Prinz & Partner mbB

(57) **Abstract**

The invention relates to a radar emulator (14) for testing a radar sensor (12) in a testing environment (16) with a potential distortion source (18). The radar emulator (14) comprises a radar signal generator (22) configured to generate at least one radar signal. The radar emulator (14) has a radar signal receiver (28) configured to receive at least one response radar signal. The radar emulator (14) also comprises a radar signal processor (30) configured to process the at least one response radar signal received. The radar emulator (14) also has an input interface (32) via which an approximate location of a radar sensor (12) or a distortion source (18) is input. The radar signal processor (30) is configured to determine at least one characteristic of the at least one response radar signal received, based on which a detected location of an emitter of the response radar signal is determined. The radar signal processor (30) is configured to map the approximate location of the radar sensor (12) input or the approximate location of the distortion source (18) input to the detected location. Further, a method of evaluating a testing environment (16) is disclosed.

## Description

### FIELD OF THE DISCLOSURE

The invention relates to a radar emulator for testing a radar sensor in a testing environment with a potential distortion source. Further, the invention relates to a method of determining a testing environment.

### BACKGROUND

Nowadays, radar sensors are used in different applications, for instance in vehicles. The number of radar sensors used in vehicles has increased significantly in the recent years due to different modern functionalities provided by the vehicles, for instance autonomous parking or even autonomous driving. In fact, the radar sensors are used to sense the surrounding of the vehicle, thereby ensuring that the vehicle can be parked or even driven in an autonomous manner. However, radar sensors are also used in other applications than in vehicles.

Accordingly, testing and characterizing a radar sensor becomes more relevant. Typically, a radar testing system is used for testing and characterizing the radar sensor. The radar testing system comprises a radar emulator, also called echo generator, which is located in front of the radar sensor to be tested, namely the device under test. When testing the radar sensor, a certain radar channel parameter shall be simulated correctly, for instance a delay and/or an angle of arrival. Hence, it is necessary that the radar emulator and the radar sensor to be tested are aligned with respect to each other.

So far, the respective alignment is done by manually measuring a geometrical setup associated with the radar testing system, namely the radar emulator and the radar sensor. For instance, the alignment is verified by means of a laser pointer or by means of a pocket rule. Obviously, the manual alignment is quite error prone, causing systematic errors when testing and characterizing the radar sensor.

Accordingly, there is a need for a possibility to test a radar sensor in a more reliable manner.

### SUMMARY

The invention provides a radar emulator for testing a radar sensor in a testing environment with a potential distortion source. The radar emulator comprises a radar signal generator capable of generating at least one radar signal. The radar emulator also comprises a radar signal receiver capable of receiving at least one response radar signal. In addition, the radar emulator has a radar signal processor capable of processing the at least one response radar signal received. Further, the radar emulator comprises an input interface via which an approximate location of the radar sensor or a distortion source is input. The radar signal processor is capable of determining at least one characteristic of the at least one response radar signal received, based on which a detected location of an emitter of the response radar signal is determined. The radar signal processor is further capable of mapping the approximate location of the radar sensor input or the approximate location of the distortion source input to the detected location.

Further, the invention provides a method of evaluating a testing environment. The method comprises the steps of:
- Generating at least one radar signal,
- Receiving at least one response radar signal,
- Processing the at least one response radar signal received,
- Inputting an approximate location of the radar sensor or a distortion source,
- Determining at least one characteristic of the at least one response radar signal received, based on which a detected location of an emitter of the response radar signal is determined, and
- Mapping the approximate location of the radar sensor input or the approximate location of the distortion source input to the detected location.

Accordingly, radio frequency components of the radar emulator are used to characterize the geometrical setup of a radar testing system comprising the radar emulator and the radar sensor to be tested, as the response radar signal received from the testing environment is evaluated.

The response radar signal may be caused by the radar sensor to be tested or the potential distortion source in the testing environment.

Since the response radar signal received is analyzed by means of the radar signal processor, the detected location of the emitter of the response radar signal can be determined based on the at least one characteristic of the at least one response radar signal received.

In fact, the radar signal processor maps the approximate location that was input via the input interference to the detected location that was determined based on the analysis of the response radar signal received. Accordingly, the radar emulator, particularly the radar signal processor, may determine a deviation between the approximate location of the radar sensor input or the approximate location of the distortion source input and the detected location of the emitter of the response radar signal. In other words, it can be verified if the detected location of the emitter of the response radar signal received corresponds to the approximate location of the radar sensor or the approximate location of the distortion source, which was input previously. In case the detected location of the emitter corresponds to the approximate location, namely within a certain tolerance range, it can be determined that the emitter of the response radar signal is the radar sensor to be tested or rather the distortion source.

Generally, the radar emulator is also called radar target simulator, as it is used to simulate a respective target for the radar sensor to be tested. Moreover, the radar emulator may be called echo generator, as the radar target is simulated by generating an echo signal for the radar sensor to be tested. Accordingly, the terms radar emulator, radar target simulator and echo generator can be used in an interchangeable manner.

Hence, the radar signal generator is an object simulator or target simulator, as an object or rather a target for the radar sensor to be tested is simulated.

Accordingly, the radar emulator is used as a radar device to send radar signals and to receive response radar signals. Accordingly, additional hardware components may be implemented which ensure that the radar emulator can be used as the radar device, e.g. a radar antenna, a radar transmitter and/or a radar receiver (and optionally a radar signal processor). Hence, the radar emulator is capable of determining a target and a distance and/or orientation of the target with respect to the radar emulator. The respective target may be the radar sensor to be tested or the potential distortion source.

Instead of manually measuring the geometrical setup of the radar testing system, namely the geometrical relationships of the radar emulator with respect to the radar sensor to be tested, the geometrical setup is determined by evaluating echo signals, namely the response radar signals, of objects in the testing environment. These objects may be the radar sensor to be tested and/or the potential distortion source.

Consequently, testing and characterizing of the radar sensor to be tested can be performed in a more reliable manner since systematic errors are minimized that are caused by a failure prone manual alignment of the radar emulator and the radar sensor to be tested. This misalignment may result in an unwanted relative orientation.

An aspect provides that the radar signal processor is capable of determining a location of the potential distortion source in the testing environment. In fact, the detected location of the emitter of the response radar signal may relate to the location of the distortion source. The radar signal emitted by the radar emulator may be reflected by the distortion source that generates the response radar signal that is received by the radar signal receiver of the radar emulator. Hence, the response radar signal may be a reflected radar signal. However, the response radar signal may also an active radar signal that is generated by a distortion source rather than the radar sensor to be tested.

Particularly, the radar signal processor is capable of determining the location of the distortion source in the testing environment in case the approximate location of the radar sensor and the detected location deviate from each other by less than a predefined value. The predefined value may relate to a boundary of an error interval that is still acceptable. In fact, it is assumed that the approximate location of the radar sensor is allowed to deviate from the real location of the radar sensor by the predefined value at the most. In other words, it is assumed that a higher deviation is indicative of another emitter than the radar sensor to be tested, for instance the distortion source.

Additionally, the location of the distortion source in the testing environment may also be determined in case the approximate location of the distortion source matches with the detected location of the emitter of the response radar signal, as it is assumed that the emitter of the response radar signal is the distortion source.

Accordingly, the radar emulator may be enabled to determine locations of the radar sensor to be tested and distortion sources within the testing environment, as the approximate location of the radar sensor is compared to the detected location(s) of the emitter(s) of the response radar signal(s) received. Hence, the radar emulator may obtain information about the location(s) of distortion source(s) within the testing environment as well as the location of the radar sensor to be tested during the same testing, e.g. simultaneously.

The radar emulator may comprises an output interface connected with the radar signal processor. The output interface is used to output information, e.g. to the user, which was obtained by the radar signal processor when mapping the approximate location of the radar sensor to the detected location. Particularly, the output interface displays the information, for instance on a screen or a display. Hence, the output interface may be an output user interface.

The output interface may be capable of displaying a location of the radar sensor based on the detected location. In case the mapping results in an acceptable deviation of the approximate location and the detected location, for instance below the predefined value, it is assumed that the emitter of the response radar signal received corresponds to the radar sensor to be tested. Hence, the respective location can be displayed accordingly.

Alternatively or additionally, the output interface is capable of displaying a location of the distortion source in the testing environment. In case the mapping results in a non-acceptable deviation of the approximate location of the radar sensor and the detected location, for instance beyond the predefined value, it is assumed that the emitter of the response radar signal received does not correspond to the radar sensor to be tested. Actually, it is assumed that the respective location of the emitter corresponds to a location of a distortion source within the testing environment. The respective location of the distortion source may (also) be displayed such that the user is informed about the location of the distortion source within the testing environment.

Furthermore, the output interface may be capable of displaying a representation of the testing environment. A testing chamber or a testing room may be displayed (additionally) such that it is easier for the user to identify the distortion source within the testing environment, namely in the real world, as the user obtains additional information that simplifies the detection of the distortion source. Afterwards, the user may initiate countermeasures, e.g. removing the distortion source identified or shielding the distortion source.

Moreover, the radar signal processor may be capable of determining settings for compensating any disturbing effects. The disturbing effects may relate to a deviation of the approximate location and the detected location, particularly in case it was verified that the detected location corresponds to the location of the radar sensor to be tested. In other words, a compensation for the deviation indicated with respect to the radar signal generation (echo generation) may be provided.

Additionally or alternatively, the settings may be used for compensating any effects by the distortion source detected within the testing environment, particularly for subsequent testing of the radar sensor to be tested.

Generally, the output interface may also provide hints or instructions with regard to improving a shielding such that interference signals provided by the distortion source(s) can be minimized appropriately.

As indicate above, the at least one response radar signal may be provided by the radar sensor to be tested or the distortion source.

The response radar signal may be a generated radar signal by the radar sensor or rather the distortion source. However, the response radar signal may be a reflected signal, for instance a signal that has been reflected by the distortion source or rather the radar sensor to be tested.

In any case, the response radar signal relates to the radar signal received by the radar emulator, particularly in response to the transmission of the radar signal that was generated and transmitted previously.

In fact, the radar signal generator and/or the radar signal processor may be established on a single hardware chip. Therefore, information/data obtained by the respective components can be shared or rather distributed among the respective components, particularly in real time.

The radar emulator may have at least one antenna connected with the radar signal generator and/or the radar signal receiver.

Generally, the distortion source, e.g. an antenna, may be at the same frequency as the radar signal such that the distortion source, e.g. the antenna, may resonate. Accordingly, the location of the distortion source can be determined more effectively.

### BRIEF DESCRIPTION OF THE DRAWINGS

The foregoing aspects and many of the attendant advantages of the claimed subject matter will become more readily appreciated as the same become better understood by reference to the following detailed description, when taken in conjunction with the accompanying drawings. In the drawings,
- Figure 1 schematically shows an overview of a radar testing system comprising a radar emulator according to an embodiment of the invention, and
- Figure 2 schematically shows an overview of a method of evaluating a testing environment according to an embodiment of the invention.

### DETAILED DESCRIPTION

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

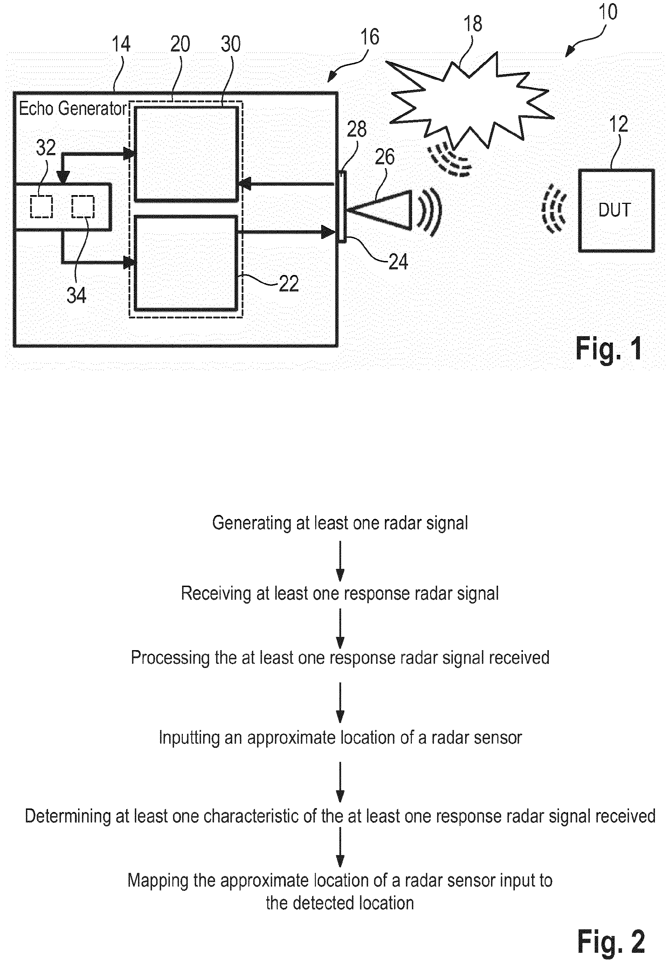

In Figure 1, a radar testing system 10 is shown that comprises a radar sensor 12 to be tested, also called device under test. The radar sensor 12 may be formed separately or integrated within a device.

The radar testing system 10 also comprises a radar emulator 14 that is used for testing the radar sensor 12. The testing of the radar sensor 12 is performed in a testing environment 16 that comprises at least one potential distortion source 18 as indicated in Figure 1.

The radar emulator 14 has a housing 20 that encompasses different components used for testing the radar sensor 12. Hence, the radar emulator 14 is a single device.

The radar emulator 14 comprises a radar signal generator 22 that is configured to generate at least one radar signal.

The radar signal generator 22 generates the at least one radar signal that is output via an output interface 24 to which at least one antenna 26 is connected. Hence, the radar signal is transmitted over-the-air, namely as a radio frequency signal.

In addition, the radar emulator 14 comprises a radar signal receiver 28 that may also be connected with the at least one antenna 26, particularly the same antenna 26. Alternatively, separately formed antennas may be provided that are connected with the radar signal generator 22 and the radar signal receiver 28, respectively. Irrespective of the antenna arrangement, at least one response radar signal is received by the radar signal receiver 28.

Generally, the response radar signal may be provided by the radar sensor 12 to be tested or the potential distortion source 18. Actually, the response radar signal is a radar signal that is actively issued by the radar sensor 12 to be tested, namely based on the radar signal received. Alternatively, the response radar signal is a reflected radar signal, namely a reflected signal of the radar signal previously transmitted by the radar emulator 14. The reflection may take place at the radar sensor 12 to be tested or the distortion source 18. Moreover, the response radar signal may also correspond to an actively generated signal of the distortion source 18.

Irrespective of the origin of the response radar signal, the radar signal receiver 28 forwards the response radar signal to a radar signal processor 30 to which the radar signal receiver 28 is connected.

The radar signal processor 30 is capable of processing the at least one response radar signal received in order to analyze the response radar signal, e.g. determining/estimating at least one characteristic of the response radar signal.

Based on the at least one characteristic of the response radar signal received, the radar signal processor 30 may characterize an object in the testing environment 16, for instance a distance and/or orientation with respect to the radar emulator 14.

Generally, the radar signal generator 22 may also generate the at least one radar signal to be output/transmitted based on the at least one characteristic of the response radar signal received. Therefore, the radar emulator 14 may also be called echo generator, as an echo signal, particularly an echo radar signal, is generated based on the radar signal received by the radar signal receiver 28.

However, in the application described hereinafter, the radar emulator 14 is used in a different manner, as the radar emulator 14 is used as a radar that transmits the radar signal and receives the response radar signal in order to evaluate the testing environment 16. Actually, the location of the radar sensor 12 to be tested and location(s) of potential distortion source(s) 18 in the testing environment 16 may be determined by means of the radar emulator 14.

For this purpose, the radar emulator 14 has an input interface 32, for instance an input user interface via which the user of the radar emulator 14 inputs an approximate location of the radar sensor 12. Alternatively, the input interface 32 is an interface via which the approximate location of the radar sensor 12 is input in a computer-aided manner, e.g. automatically.

In addition, the radar signal processor 30 is capable of determining a detected location of an emitter of the response radar signal received based on the at least one characteristic of the radar signal received.

The radar signal processor 30 is further capable of mapping the approximate location of the radar sensor 12 input or the approximate location of the distortion source 18 by the user via the user interface 32 to the detected location that was determined based on the at least one characteristic of the radar signal received.

Accordingly, the radar emulator 14, particularly the radar signal processor 30, is enabled to determine whether the approximate location of the radar sensor 12 or the one of the distortion source 18 and the detected location deviate from each other in an acceptable manner, particularly by less than a predefined value.

In case the deviation is acceptable, namely lower than the predefined value, and the approximate location of the radar sensor 12 was input, it is assumed that the detected location of the emitter of the response radar signal received corresponds to the location of the radar sensor 12.

In case the deviation is not acceptable anymore, namely higher than the predefined value, and the approximate location of the radar sensor 12 was input, the detected location of the emitter of the response radar signal received does not correspond to the location of the radar sensor 12. Accordingly, it is assumed that the detected location corresponds to the location of the distortion source 18.

In case the deviation is acceptable, namely lower than the predefined value, and the approximate location of the distortion source 18 was input, it is assumed that the detected location of the emitter of the response radar signal received corresponds to the location of the distortion source 18.

In case the deviation is not acceptable anymore, namely higher than the predefined value, and the approximate location of the distortion source 18 was input, the detected location of the emitter of the response radar signal received does not correspond to the location of the distortion source 18. Accordingly, it is assumed that the detected location corresponds to the location of the radar sensor 12.

Therefore, the radar emulator 14 is generally enabled to determine the location(s) of distortion source(s) 18 as well as the location of the radar sensor 12 itself.

The radar emulator 14 further comprises an output interface 34 that is connected with the radar signal processor 30.

The output interface 34 is used to display the location of the emitter of the response radar signal received. Particularly, the location of the radar sensor 12 to be tested and, optionally, the location(s) of the distortion source(s) 18 are displayed.

In addition, the output interface 34 may also display a representation of the testing environment 16 such that the user of the radar emulator 14 is enabled to identify the distortion source 18 in the testing environment 16 directly, namely in the real world. Hence, the output interface 34 corresponds to an output user interface.

Additionally, the output interface 34 also provides instructions to the user how to improve the testing environment 16, e.g. by shielding the at least one distortion source 18 such that interference signals provided are minimized appropriately.

Furthermore, the radar signal processor 30 determines settings for compensating any disturbing effect, for instance an acceptable deviation of the approximate location and the detected location. Hence, the acceptable deviation can be compensated in a subsequent testing of the radar sensor 12.

Additionally or alternatively, the settings may compensate any effects of the distortion source 18 within the testing environment 16.

Generally, the radar emulator 14 shown in Figure 1 is enabled to perform the method shown in Figure 2.

In a first step, at least one radar signal is generated by the radar signal generator 22 of the radar emulator 14. The generated radar signal is also transmitted via the at least one antenna 26 as a radio frequency signal.

In a second step, at least one response radar signal is received by the radar signal receiver 28, particularly via the at least one antenna 26. The at least one response radar signal may be an actively generated radar signal in response to the radar signal previously transmitted by the radar emulator 14, particularly the radar signal generator 22 of the radar emulator 14.

In a third step, the at least one response radar signal received is processed by the radar signal processor 30. When processing the at least one response radar signal received, the at least one characteristic of the at least one response radar signal received is determined.

In a fourth step, an approximate location of the radar sensor 12 or the distortion source 18 is input via the input interface 32 by a user.

In a fifth step, the at least one characteristic of the at least one response radar signal received is determined by the radar signal processor 30, based on which a detected location of an emitter of the response radar signal is determined. In fact, the at least one characteristic can be used to determine a relative distance/orientation of the emitter of the response radar signal with respect to the radar emulator 14

In a sixth step, the radar signal processor 30 maps the approximate location of the radar sensor 12 input previously or the approximate location of the distortion source 18 input previously to the detected location of the emitter of the at least one response radar signal.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radar emulator (14) for testing a radar sensor (12) in a testing environment (16) with a potential distortion source (18), the radar emulator (14) comprising
- a radar signal generator (22) configured to generate at least one radar signal,
- a radar signal receiver (28) configured to receive at least one response radar signal,
- a radar signal processor (30) configured to process the at least one response radar signal received, and
- an input interface (32) via which an approximate location of the radar sensor (12) or a distortion source (18) is input,
wherein the radar signal processor (30) is configured to determine at least one characteristic of the at least one response radar signal received, based on which a detected location of an emitter of the response radar signal is determined, and
wherein the radar signal processor (30) is configured to map the approximate location of the radar sensor (12) input or the approximate location of the distortion source (18) input to the detected location.

2. The radar emulator (14) according to claim 1, wherein the radar signal processor (30) is configured to determine a location of the distortion source (18) in the testing environment (16).

3. The radar emulator (14) according to claim 2, wherein the radar signal processor (30) is configured to determine the location of the distortion source (18) in the testing environment (16) in case the approximate location of the radar sensor (12) and the detected location deviate from each other by less than a predefined value.

4. The radar emulator (14) according to any one of the preceding claims, wherein the radar emulator (14) comprises an output interface (34) connected with the radar signal processor (30).

5. The radar emulator (14) according to claim 4, wherein the output interface (34) is configured to display a location of the radar sensor (12) based on the detected location, a location of the distortion source (18) in the testing environment (16) and/or a representation of the testing environment (16).

6. The radar emulator (14) according to any one of the preceding claims, wherein the radar signal processor (30) is configured to determine settings for compensating any disturbing effects.

7. The radar emulator (14) according to any one of the preceding claims, wherein the at least one response radar signal is provided by the radar sensor (12) or the distortion source (18).

8. The radar emulator (14) according to any one of the preceding claims, wherein the radar signal generator (22) and/or the radar signal processor (30) are established on a single hardware chip.

9. A method of evaluating a testing environment (16), the method comprising the steps of:
- Generating at least one radar signal,
- Receiving at least one response radar signal,
- Processing the at least one response radar signal received,
- Inputting an approximate location of a radar sensor (12) or a distortion source (18),
- Determining at least one characteristic of the at least one response radar signal received, based on which a detected location of an emitter of the response radar signal is determined, and
- Mapping the approximate location of the radar sensor (12) input or the approximate location of the distortion source (18) input to the detected location.

10. The method according to claim 9, wherein a location of the distortion source (18) is determined in the testing environment (16), in particular wherein the location of the distortion source (18) is determined in the testing environment (16) in case the approximate location of the radar sensor (12) and the detected location deviate from each other by less than a predefined value.

11. The method according to claim 9 or 10, wherein, based on the detected location, a location of the radar sensor (12) is displayed on an output interface (34).

12. The method according to any one of claims 9 to 11, wherein a location of the distortion source (18) in the testing environment (16) is displayed on an output interface (34).

13. The method according to any one of claims 9 to 12, wherein a representation of the testing environment (16) is displayed on an output interface (34).

14. The method according to any one of claims 9 to 13, wherein settings for compensating any disturbing effects are determined.

15. The method according to any one of claims 9 to 14, wherein the at least one response radar signal is provided by the radar sensor (12) or the distortion source (18).
